(19) Europäisches Patentamt / European Patent Office / Office européen des brevets

(11) **EP 4 137 970 A1**

(12) **EUROPEAN PATENT APPLICATION**

(43) Date of publication:
**22.02.2023 Bulletin 2023/08**

(51) International Patent Classification (IPC):
***G06F 16/68*** *(2019.01)*

(21) Application number: **21191467.6**

(52) Cooperative Patent Classification (CPC):
**G06F 16/68**

(22) Date of filing: **16.08.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Utopia Music AG**
**6300 Zug (CH)**

(72) Inventors:
• **Wahlgren, Linus**
**6300 Zug (CH)**
• **Flach, Max**
**6300 Zug (CH)**

(74) Representative: **Kolster Oy Ab**
**Salmisaarenaukio 1**
**P.O. Box 204**
**00181 Helsinki (FI)**

(54) **APPARATUS, METHOD AND COMPUTER PROGRAM CODE FOR PROCESSING AN AUDIO METADATA STREAM**

(57) An apparatus, method and computer program code for processing an audio metadata stream are disclosed. The method comprises: receiving (204) a first metadata entry from an audio metadata stream associated with an audio stream; extracting (206) first metadata elements from the first metadata entry; searching (208) the database for each of the first metadata elements to receive result sets; selecting (210), from the result sets, matching result elements for the first metadata elements; mapping (212) metadata types associated with the matching result elements to positions of the first metadata elements in the first metadata entry; and determining (214) a structure of the first metadata entry based on the mapping.

FIG. 1

EP 4 137 970 A1

**Description**

FIELD

Various embodiments relate to an apparatus, method, and computer program code for processing an audio metadata stream.

BACKGROUND

Audio streams are often accompanied by associated audio metadata streams. An audio metadata stream may provide information related to the associated audio stream, such as information on the content that is currently playing on the audio stream.

Automated analysis of audio streams may include analysis of the associated audio metadata streams. There are few conventions regarding audio metadata streams, and their analysis may be challenging due to their unstructured nature. The quality of audio streams and associated audio metadata streams may also vary, and more sophisticated analyses may be desirable.

BRIEF DESCRIPTION

According to an aspect, there is provided subject matter of independent claims. Dependent claims define some embodiments.

One or more examples of implementations are set forth in more detail in the accompanying drawings and the description of embodiments.

LIST OF DRAWINGS

Some embodiments will now be described with reference to the accompanying drawings, in which

FIG. 1 illustrates embodiments of an apparatus for processing an audio metadata stream;
FIG. 2 is a flow chart illustrating embodiments of a method for processing an audio metadata stream;
FIG. 3 illustrates examples of extracting metadata elements;
FIG. 4 illustrates examples of searching a database;
FIG. 5 illustrates examples of computing combination scores;
FIG. 6 illustrates embodiments related to selecting matching result elements;
FIG. 7 illustrates embodiments of a method for processing an audio metadata stream;
FIG. 8 illustrates examples of reverse mapping a structure and determining metadata types;
FIG. 9 illustrates examples of metadata entries and labelled metadata results; and
FIG. 10 and FIG. 11 illustrate examples of metadata entries.

DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

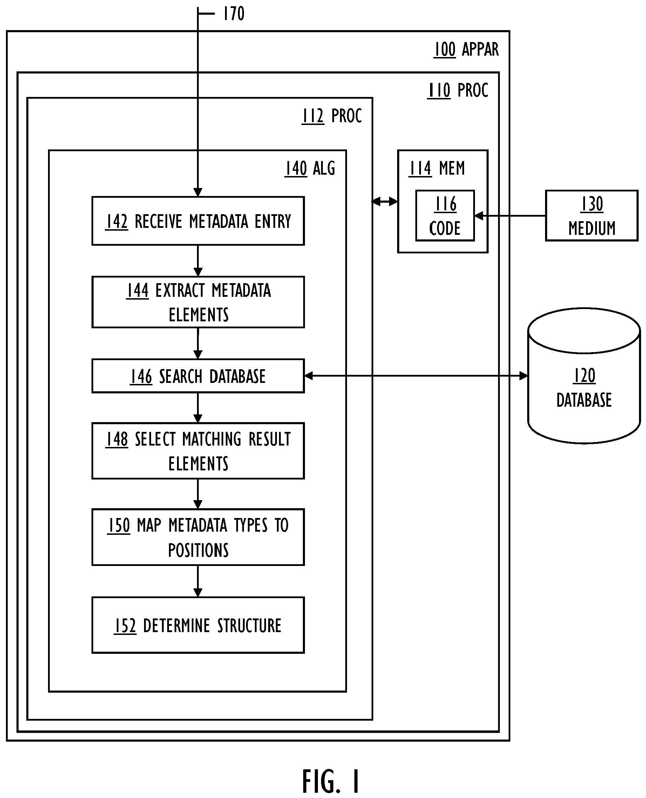

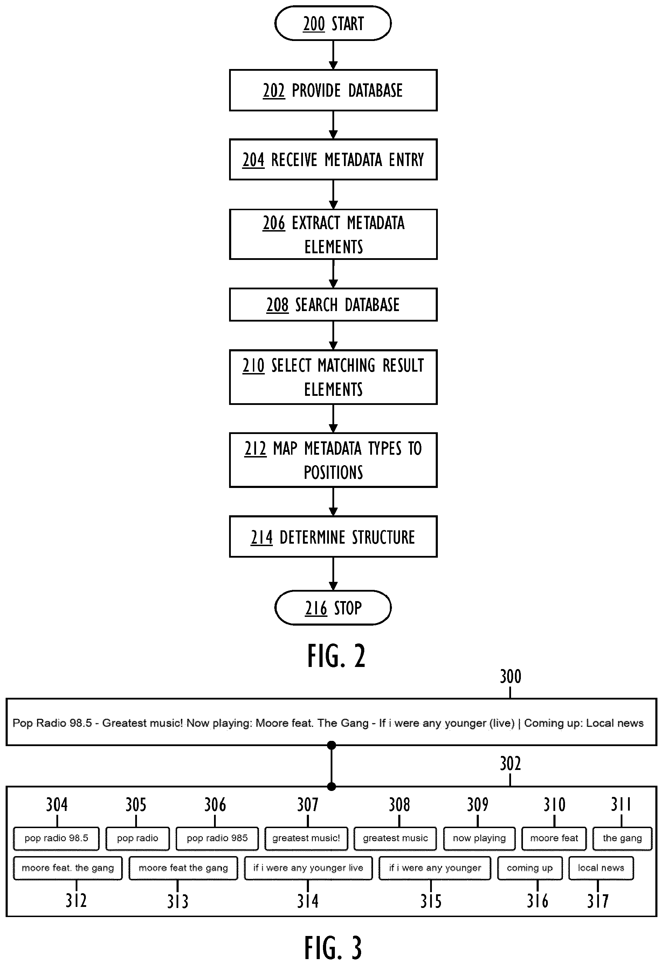

Let us study simultaneously FIG. 1 illustrating embodiments of an apparatus 100 for processing an audio metadata stream 170, and FIG. 2 illustrating embodiments of a method for processing the audio metadata stream.

The apparatus 100 comprises one or more processors 110 configured to cause performance of the apparatus 100. The apparatus further comprises a database 120 configured to store tracks. Each track stored in the database comprises track metadata.

In an embodiment, the one or more processors 110 comprise one or more memories 114 including computer program code 116, and one or more processors 112 configured to execute the computer program code 116 to cause performance of the apparatus 100.

In an embodiment, the one or more processors 110 comprise a circuitry configured to cause the performance of the apparatus 100.

Consequently, the apparatus 100 may be implemented as one or more physical units, or as a service implemented by one or more networked server apparatuses. The physical unit may be a computer or another type of a general-purpose off-the-shelf computing device, as opposed to a purpose-build proprietary equipment, whereby research & development costs will be lower as only the special-purpose software (and not the hardware) needs to be designed, implemented, and tested. However, if highly optimized performance is required, the physical unit may be implemented with proprietary integrated circuits. The networked server apparatus may be a networked computer server, which operates according to a client-server architecture, a cloud computing architecture, a peer-to-peer system, or another applicable distributed computing architecture.

A non-exhaustive list of implementation techniques for the processor 112 and the memory 114, or the circuitry, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 114 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 116 may be written by a suitable programming language (such as C, C++, assembler or machine language, for example), and the resulting executable code may be stored in the memory 114 and run by the processor 112. The computer program code 116 implements a part of an algorithm 140 as the method illustrated in FIG. 2. The computer program code 116 may be in source code form, object code form, executable form, or in some intermediate form, but for use in the one or more processors 112 it is in the executable form. There are many ways to structure the computer program code 116: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 116 for performing a wide variety of standard operations. In addition, an operating system (such as a general-purpose operating system or a real-time operating system) may provide the computer program code 116 with system services.

An embodiment provides a computer-readable medium 130 storing the computer program code 116, which, when loaded into the one or more processors 112 and executed by one or more processors 112, causes the one or more processors 112 to perform the method of FIG. 2. The computer-readable medium 130 may comprise at least the following: any entity or device capable of carrying the computer program code 116 to the one or more processors 112, a record medium, a computer memory, a read-only memory, an electrical carrier signal, a telecommunications signal, and a software distribution medium. In some jurisdictions, depending on the legislation and the patent practice, the computer-readable medium 130 may not be the telecommunications signal. In an embodiment, the computer-readable medium 130 is a computer-readable storage medium. In an embodiment, the computer-readable medium 130 is a non-transitory computer-readable storage medium.

The algorithm 140 comprises the operations 142, 144, 146, 148, 150, 152 but not all of them need to be implemented and run on the same apparatus 100, i.e., operations 144 and/or 146, for example, may be performed on another apparatus. The operations include receiving 142 a first metadata entry from an audio metadata stream associated with an audio stream and extracting 144 first metadata elements from the first metadata entry. The database 120 is searched 146 for each of the first metadata elements to receive result sets, and matching result elements are selected 148 for the first metadata elements from the result sets. Metadata types associated with the matching result elements are mapped 150 to positions of the first metadata elements in the first metadata entry; and a structure of the first metadata entry is determined 152 based on the mapping.

The method starts in 200 and ends in 216. The method forms a part of the algorithm 140 running in the one or more processors 110. The operations of FIG. 2, such as 204, 206, 208, 210, 212, and 214, may correspond to the operations FIG. 1, such as 142, 144, 146, 148, 150, and 152.

The method for processing an audio stream comprises providing 202 a database 120 configured to store tracks. The method further comprises receiving 204 a first metadata entry from an audio metadata stream associated with an audio stream, extracting 206 first metadata elements from the first metadata entry, searching 208 the database for each of the first metadata elements to receive result sets, selecting 210, from the result sets, matching result elements for the first metadata elements, mapping 212 metadata types associated with the matching result elements to positions of the first metadata elements in the first metadata entry, and determining 214 a structure of the first metadata entry based on the mapping.

The operations are not strictly in chronological order in FIG. 2, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The above method, apparatus and computer program code allow for analysis of a previously unknown audio metadata stream. Determining the structure of a metadata entry or metadata entries of the metadata stream may tell what kind of information, or what metadata types are provided by the metadata stream regarding content of the audio stream, such as a song currently playing on the audio stream. Further, the information regarding the content may be extracted from the (first) metadata entry using the structure. Some possible application areas include copyright monitoring, as copyright holders may monitor audio metadata streams as described herein to find out if their works, e.g. songs, are played by audio streams with or without their permission, and/or whether appropriate royalties have been paid.

Solutions described herein may also be combined with analysis of the audio streams, and/or with machine learning techniques. The audio metadata streams may provide metadata labels for the content of the audio streams to teach a machine learning system, for example. The solutions described herein may also be considered machine learning methods or systems.

The method, apparatus and computer program code are now described in more detail with reference to FIG. 3, 4 and 5, which illustrate embodiments of extracting metadata elements, searching the database, and computing scores for the selecting of matching result elements.

A first metadata entry 300 is received from the audio metadata stream associated with the audio stream. In an embodiment, the first metadata entry comprises a string, or more specifically, a text string. The first metadata entry 300 of FIG. 3 reads: "Pop Radio 98.5 - Greatest music! Now playing: Moore feat. The Gang - If i were any younger (live) | Coming up: Local news".

The audio metadata stream may be packaged with the audio stream so that when receiving audio from the audio stream, metadata entries from the metadata stream are also received along with the audio. Alternatively or additionally, the metadata stream may be received or queried separately from the audio stream. The first metadata entry may be received in response to a request made by the apparatus to an interface providing the audio metadata stream, for example.

The apparatus 100, memory 114, code 116, medium 130, database 120 and/or another accessible location may comprise a collection of known separators, such as characters "-", "/", "(", ")", "!", ".", ":", "|". A rule or rules for extracting metadata elements may also be comprised in the above location. First metadata elements 302 are extracted from the first metadata entry 300. In FIG. 3 the first metadata elements comprise exemplary metadata elements 304-317. The extracting may comprise using the known separators and/or rule(s) to extract the first metadata elements 302 from the first metadata entry 300.

As illustrated in FIG. 3, the first metadata elements may be at least partially overlapping. For example, elements 304-306 are partially overlapping. The extracting may comprise segmenting the first metadata entry using the rule(s) or the known separators. An example result of the segmenting is element 304, which originates from the beginning of the first metadata entry 300, ending in the separator "-". The extracting may also comprise removing predetermined characters from the elements, such as whitespace, including spaces at the beginning and end of each element, and punctuation, such as the characters in the collection of known separators. In FIG. 3, element 306 corresponds to element 304, but with the "." between the "98" and the "5" removed. The extracting may also comprise case conversion, such as converting the entire first metadata entry to lowercase. This allows for the method and algorithm to operate in a case-insensitive manner, which may allow for more matching result elements. Alternatively, case information may be maintained, making the matching result elements more specific and possibly more accurate. However, case insensitivity may be preferred, as case information is often redundant, and it is very often incorrectly reported in metadata streams.

It may be observed that only the first metadata elements 310-315 are related to the song that is currently playing on the stream. Elements 304-308 are related to the station providing the stream and elements 316-317 describe upcoming programs. Element 309, "now playing", may hint that it is likely followed by information related to the song that is currently playing. Such elements may be considered anchors, and the method may comprise identifying and/or storing anchor elements, and/or using anchor elements to locate positions of interest within the first metadata entry. As the anchor elements may indicate positions of other metadata elements related to the currently playing song, they may be utilized to locate said positions in the first metadata entry. In addition to removing certain characters, the extracting may also comprise removing predetermined phrases or regular expressions from the first metadata entry and/or the first metadata elements. Phrases such as "pop radio" (element 305), "now playing" (element 309), or "local news" (element 317) may be removed, as they contain little to no information related to the song that is currently playing, and may not be useful in the following steps. The predetermined phrases may be stored in the apparatus 100, memory 114, code 116, medium 130, database 120 and/or another accessible location, and/or they may be learned continuously over time from the first metadata stream, other metadata streams, or another source. The removing may be carried out before and/or after the extracting, i.e. on the first metadata entry and/or on the first metadata elements.

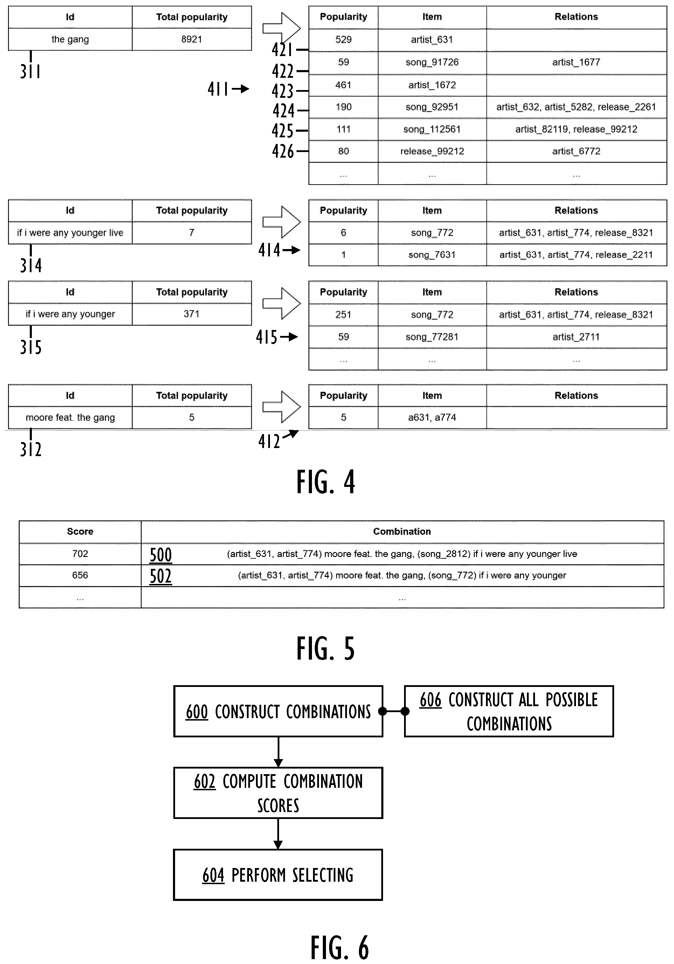

FIG. 4 illustrates searching the database for some of the first metadata elements that were extracted in FIG. 3. The searching may be targeted at several tables or equivalent structures of the database, corresponding to songs, artists and albums, for example. The searching may comprise performing a reverse lookup in the database. The searching may comprise searching for all database entries that contain the first metadata element in question or searching for exact matches of the first metadata element. The former may be very quick and result in a larger number of results than the latter, and may therefore be preferable.

In FIG. 4, searching for the first metadata elements 311, 314, 315 and 312 has resulted in respective result sets 411, 414, 415 and 412. Each result set comprises result elements; for example, result set 411 comprises result elements 421-426. The result elements may correspond to database entries; result element 421 refers to an artist with a database identifier "artist_631", result element 422 refers to a song with the database identifier "song_91726", and result element 426 refers to a release, which may be an album, for example, known as "release_99212". The result elements in the result sets may not be limited by type, and result elements of different types such as songs, artists and albums may be obtained. In FIG. 4, the type of each result element may be inferred from their database identifiers, however, the identifiers may not include the prefix (such as "artist_" or "a") when stored in the database, and the prefix may only serve an illustrative purpose in FIG. 4. The type of a result element may also be inferred from the database table it was retrieved from, for example.

The result elements may also have relations with respect to one another; for example, result element 422 ("song_91726") is related to "artist_1677", not illustrated as a result element the result set 411. In this case, the relation may indicate that "song_91726" may have been performed by "artist_1677", for example. It is also noted that one result element may refer to multiple database entries, such as in result set 412, wherein a result element refers to artists "a631" and "a774", representing a collaboration of the two, for example.

Popularities of the result sets and/or result elements are also illustrated in FIG. 4. The popularities of result elements may relate to frequencies or occurrences of the result elements in the database. The popularities may also relate to the number and/or quality of relations of the result elements. For example, an artist with lots of releases and/or songs may have a higher popularity than another artist who has only ever published one song. The total popularities illustrated adjacent to the first metadata elements 311, 312, 314 and 315 may represent popularities of the respective result sets 411, 412, 414 and 415. That is, the popularity of result set 411 would be 8921 in FIG. 4. The total popularity of the result set may be computed from the popularities of the result elements of the result set. For example, computing the total popularity of the result set may comprise computing a (weighted or non-weighted) sum of the popularities of the result elements of the result set.

FIG. 5 and FIG. 6 illustrate scoring, or computing scores from combinations of the result elements. In an embodiment, the selecting 148, 210 comprises constructing 600 combinations. The combinations comprise combination result elements from result elements in the result sets. FIG. 5 illustrates combinations 500, 502, of which combination 500 comprises combination result elements "moore feat. the gang" corresponding to database identifiers "artist_631" and "artist_774", and "if I were younger live" corresponding to database identifier "song_2812". The selecting 148, 210 may further comprise computing 602 a combination score for each of the combinations, and performing 604 the selecting based on the combination scores. In FIG. 5, combination scores 702 and 656 have been computed for combinations 500 and 502, respectively. The combinations may be ranked by order of increasing combination scores, and the combination with the highest combination score may be selected. In FIG. 5, combination 500 has the highest combination score, and may thus be selected. A combination score rejection threshold may also be used to reject combinations with combination scores that fall below the combination score rejection threshold. This may allow for preventing incorrectly matching result elements to the first metadata entry in the case that the correct result elements are not available in the database and no appropriate combinations may be constructed. In such cases, zero matching result elements may be selected, and the structure may be empty. Alternatively or additionally, the computing may be performed in parallel with the selecting, and the computing may be continued until a combination score exceeds a combination score threshold, and the computing is then terminated, and said combination is selected. This may allow for saving time and computational resources.

Returning to the first metadata entry 300 of FIG. 3, combination 500 of FIG. 5 clearly seems to be the best match, of all the possibilities available within the database, for the first metadata entry. Comparing to combination 502, for example, the information that the song was a live performance is included in combination 500 but not in combination 502. Very accurate results may therefore be achieved, but without compromising computational efficiency.

In an embodiment, the constructing 600 comprises constructing 606 all possible combinations of the result elements in the result sets, wherein each combination comprises at most one result element from each result set. One combination may not contain more than one result element from a particular result set. However, result elements that refer to the same database entry may be comprised in more than one of the result sets. For example, in FIG. 4, result sets 414 and 415 both contain a result element that corresponds to "song_772", and "song_772" could, in principle, be repeated a combination or in some combinations. The combinations may not comprise result elements from all of the result sets. For example, combination 502 may only comprise result elements from result sets 412 and 414.

In an embodiment, the combination score is related to frequencies or popularities of the combination result elements in the database. The frequencies of the result elements may relate to their popularities or (number of) occurrences in the database. The frequencies or popularities may also relate to the number and/or quality of the relations of the result elements in the database. For example, relations to database entries of different types may be scored in different ways. In the examples of FIG. 4 and FIG. 5, the combination score of combination 502 may be related to the popularities of the combination result elements corresponding to artist 631 together with artist 774, and song 772. The respective popularity values obtained from the tables of result sets 412 and 415 in FIG. 5 are 5 and 251, respectively. The frequencies or popularities may increase the likelihood of selecting the correct corresponding database entries for the first metadata elements. Computing the combination score from the frequencies or popularities may also be a computationally cheap operation, saving time and resources.

In an embodiment, the combination score is further related to popularities of the result elements in the result sets of the combination result elements. In the case of result element 421, the combination score of a combination comprising said result element 421 may be related to popularities of result elements 422-426, and/or other result elements of result set 411 not illustrated in FIG. 4. This allows for taking into account how common the first metadata elements may be in the database, and by computing the combination scores, emphasizing less common first metadata elements over common first metadata elements. For example, a first metadata element "the" may result in a result set comprising a large number of result elements, some with possibly very high popularities. The word "the" however may carry very little information that is useful for characterizing the song playing on the audio stream. Moreover, words or phrases that are not common or are proper nouns that refer to a specific entity or entities, such as "Moore", are likely to result in smaller result sets in terms of both the number of result elements in the result set and the popularities of the result elements in the result set. Therefore, such first metadata elements may carry more information and may be emphasized accordingly by the combination scores.

In an embodiment, the combination score is related to ratios of the popularities of the combination result elements in the database and the popularities of the result elements in the result sets of the combination result elements. This combines the above approaches, allowing for a balanced evaluation of the popularity of a result element in the context of the database, which may be utilized to determine the best combination of result elements for the first metadata entry.

In an embodiment, the combination score is related to types of the combination result elements. For example, the combination score may be related to a number of different types of the combination result elements. It may be desirable to select matching result elements that contain more different types of result elements than fewer. By enforcing the selection of different types of result elements, the matching result elements are more likely to be a good match for the first metadata entry. Further, the matching result elements may contain more information regarding the first metadata entry, as opposed to if they were of fewer different types. For example, it may be desirable to recognize an artist and a song from a first metadata entry. It may be even more desirable to also recognize an album and further an album position from the first metadata entry. It may also be unlikely that the first metadata entry were to contain e.g. multiple different song names, as often a metadata stream only plays one song at a time. However, there are some exceptions regarding multiple songs, artists and such in the same first metadata entry, as was seen in the examples of FIG. 4 and FIG. 5. Nevertheless, these exceptions may be handled by referring to multiple database entries from one result element, for example, as was seen in the case of the first metadata element "moore feat. the gang".

The combination score may further be related to the lengths of the first metadata elements and/or sizes of the result sets, or numbers of the result elements in the result sets. The combination score(s) may be computed in one step or in several steps. For example, in a stepwise implementation, the following formula may be used for computing a combination result element score, which may be an intermediate in computing the combination score:

$$\text{combination result element score} = (\text{length of first metadata element} + (\text{popularity} / \text{total popularity} \times 100)) \times \text{number of items in result set}$$

In the above, the length of the first metadata element may refer to the number of characters, preferably including or alternatively excluding spaces and/or punctuation, of the first metadata element that was searched for to obtain the (combination) result element in question. The popularity refers to the popularity of the combination result element, and the total popularity refers to the popularities of the result elements in the result sets of the combination result elements, such as a sum of said popularities, for example. The number of items in the result set may refer to the number of result elements in the result set. Considering, as an example, the first result element in the result set 414 of FIG. 4, the combination result element score may be computed as: (26 + (6 / 7 x 100)) x 2 = 223, rounded (down) to the nearest integer. Considering, as another example, the only result element shown in result set 412 of FIG. 4, the combination result element score may be computed as: (20 + (5 / 5 x 100)) x 1 = 120. The constant "100" may be considered an exemplary scaling factor and it may be replaced with another suitable value if necessary.

The combination score may be computed from the combination result element scores with the following formula:

$$\text{combination score} = (\text{sum of combination result element scores}) \times$$
$$(\text{number of different types of combination result elements})$$

As an example, the combination score of combination 502 may be computed with the combination result element scores computed above as: (223 + 120) x 2 = 686. The scores in FIG. 5 may be computed with a different formula or with the same formula as above, using a different value for the scaling factor (here 100); the popularities of FIG. 4 and scores of FIG. 5 are examples and for illustrative purposes only.

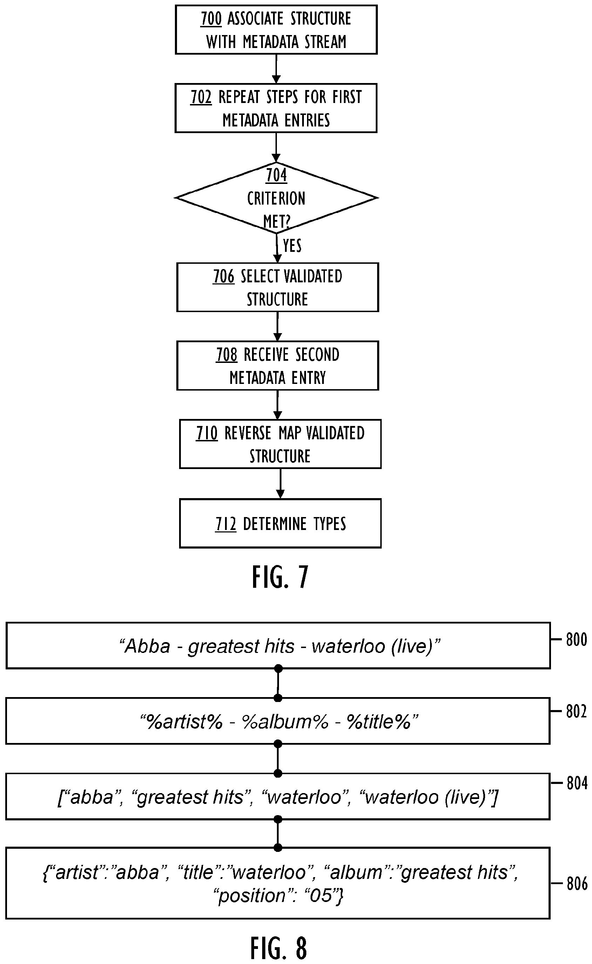

FIG. 7 illustrates further embodiments of the algorithm or the method for processing the audio metadata stream. When the structure has been determined, it may further be associated 700 with the audio metadata stream. The associating 700 allows for utilizing the structure at a later point in time without the need for re-determining the structure.

The structure may also be validated by repeating 702 the receiving, extracting, searching, selecting, mapping, determining, and associating for one or more first metadata entries. Repeating the above steps results in one or more, or preferably, a plurality of structures associated with the audio metadata stream. Some or all of the structures may be similar, or some or all of them may be different. For example, a majority of the structures associated with the first metadata stream may be the same, and a minority of them different from the majority. The one or more structures associated with the audio metadata stream may be compared 7004 to a validation criterion or criteria. The validation criterion may comprise a required number of structures that must be associated with the first metadata stream. For example, the required number of structures may be 100. The validation criterion may comprise a required number, fraction and/or percentage of the same or similar structures associated with the first metadata stream. The required number of the same structures may be 80, or the required percentage may be 80 %, for example. In practice, this may correspond to the same structure repeated in 80 % of the associated structures. If the validation criterion is met, a validated structure may be selected 706 for the metadata stream from the one or more structures. The validated structure may correspond to the most popular structure associated with the metadata stream, i.e. the structure that is repeated most in the associated structures.

The above validation may achieve two different goals: it may validate both the determined structure of the metadata stream, and the content of the metadata stream. As the associated structures have been determined using the track metadata stored in the database, which may be considered ground truth data, both the structure and the content of the metadata stream are ensured to be correct if the validation criterion is met. As a result of the validation, the audio metadata stream may be considered a reliable and/or trustworthy source of audio metadata. A validated audio metadata stream may also be considered a source of ground truth data. The validation may also be repeated at regular or irregular intervals to ensure that the audio metadata stream remains a reliable source of audio metadata.

Embodiments are not necessarily limited to one validated structure; as with the associated structures, more than one validated structure may be selected. For example, a metadata stream may sometimes report an album position of a song, and sometimes not. One or more alternative validated structures may be selected to be used in such situations.

An embodiment further comprises saving one or more of the second metadata elements to the database. The reverse mapping allows for acquiring metadata of previously unseen tracks that have not yet been saved in the database. The second metadata elements of a previously unseen track may be saved in the database, and thus the database may be extended to comprise metadata of the previously unseen track. The database may therefore automatically adapt to new songs played by the audio stream.

With the above, the database may grow over time to contain new tracks saved from the metadata stream. The database may be related to more than one metadata stream; the above may be applied to a plurality of audio metadata streams, using the same database for the plurality of audio metadata streams. Each metadata stream of the plurality of metadata streams may have their own associated and/or validated structure(s). Audio metadata originally in the database or saved from a validated audio metadata stream may be used to validate a further audio metadata stream, which in turn may provide more audio metadata to the database. A beneficial snowball effect or positive feedback loop may thus be achieved in the growth of the database. In principle, the database may initially be empty, and then grown with metadata from one (or more) validated metadata stream(s). In an alternative scenario, the database may initially contain some track metadata, and one or more metadata streams may be validated as described herein to grow the database with metadata from the metadata streams.

The structure may comprise information regarding positions and/or metadata types of the first metadata elements or the matching result elements that correspond to (some of) the first metadata elements. In an embodiment, the structure comprises one-to-one associations between the metadata types and the positions. The structure may comprise a regular expression, for example. The structure may be expressed as a string resembling the first metadata entry (or entries). For example, FIG. 8 illustrates metadata entry 800, "Abba - greatest hits - waterloo (live)". A structure 802 determined from such a metadata entry may be "%artist% - %album% - %title%", wherein the terms between the percent (%) signs indicate the metadata types of phrases found in the corresponding positions in the metadata entry 800.

In an embodiment, the method further comprises receiving 708 a second metadata entry from the audio metadata stream associated with the audio stream. The method may further comprise reverse mapping 710 the validated structure of the audio metadata stream to the second metadata entry to acquire second metadata elements from the second metadata entry. The reverse mapping allows for acquiring second metadata elements from the second metadata entry of the audio metadata stream without repeating all the steps of FIG. 2. for the second metadata entry.

In an embodiment, the reverse mapping further comprises determining 712 types for the second metadata elements as the metadata types mapped to the positions that correspond to positions of the second metadata elements in the second metadata entry. The reverse mapping allows for determining types for the second metadata elements of the second metadata entry of the audio metadata stream without repeating all the steps of FIG. 2. for the second metadata entry.

The above embodiments may be also described in more detail with the examples illustrated in FIG. 8. Now, treating metadata entry 800 as a second metadata entry, "Abba - greatest hits - waterloo (live)", is received from the audio metadata stream. A (validated) structure 802 may be reverse mapped to the second metadata entry. Second metadata elements 804 are acquired from the second metadata entry using the structure 802. Similar steps to those illustrated in FIG. 2 may also be applied; for example, extracting may be applied to acquire both metadata elements "waterloo" and "waterloo (live)" from the second metadata entry. The types of the second metadata elements are determined using the structure: "abba" is labelled as an artist, "greatest hits" as an album, and "waterloo" as a song title. In addition to the above, box 806 contains information related to the position of the song within the album. Such information was not provided in the metadata stream, but may have been retrieved from the database using the information available in the second metadata entry. Box 806 also does not include the metadata element "waterloo (live)", and it may have been removed in a way similar to what was described earlier in the context of the extracting. Box 806 may represent a labelled metadata result, which may be a best guess of the true metadata of the song playing on the audio stream. The labelled metadata result may comprise the second metadata elements and their types acquired with the reverse mapping. The second metadata elements may also be modified, such as by extracting (parts of) some of the second metadata elements. In addition, the labelled metadata result may be amended with further track metadata from the database, as is shown in FIG. 8.

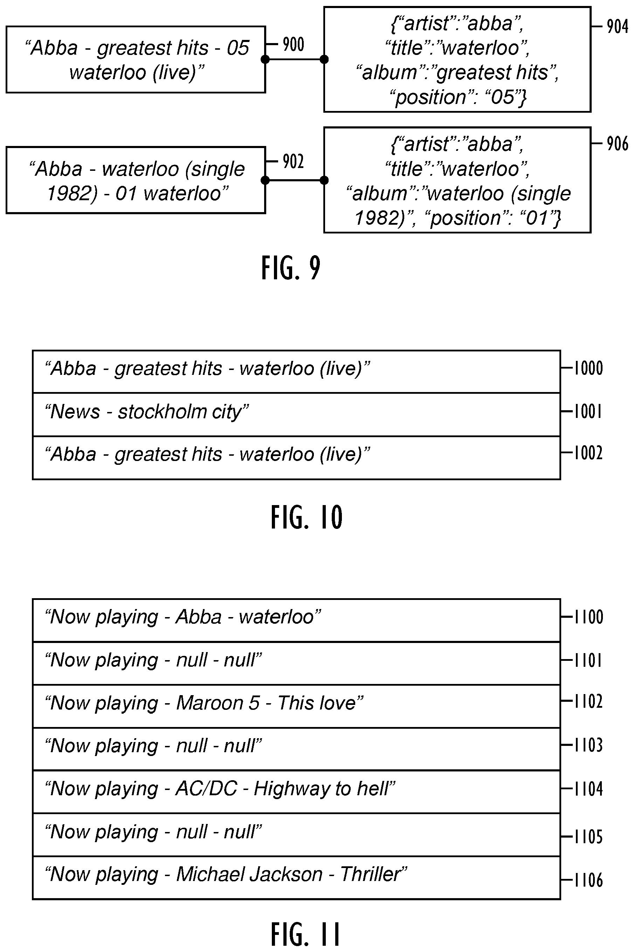

The position of a song within an album may also be provided in the metadata stream, and be utilized in the method. FIG. 9 illustrates metadata entries 900, 902 that contain album positions, and respective labelled metadata results 904, 906. In an embodiment, the mapping comprises mapping an album position to a position in the first metadata entry. The album position may help in selecting the correct matching result elements for the first metadata elements, for example.

FIG. 10 and FIG. 11 illustrate examples of metadata entries 1000-1002 and 1100-1106. The metadata entries may be first or second metadata entries. Let us consider an example wherein the validated structure 802 has been selected, and second metadata entries 1000-1002 are received. An embodiment comprises rejecting the second metadata entry if it does not match the validated structure. The second metadata entry may be rejected if the reverse mapping of the validated structure is not or is not expected to be successful. Validated structure 802 tells us that metadata entries are expected to be of a format "%artist% - %album% - %title%". Second metadata entries 1000 and 1002 match the format, but 1001 does not. the second metadata entry 1001 may thus be rejected. The second metadata entry 1001 does not contain information regarding the song currently playing, and it may not be of interest.

Now, considering another example wherein the metadata entries 1000-1002 are first metadata entries, the term "news" may be stripped from first metadata entry 1001 as a part of the extracting. Further, unless "News—stockholm city" were to correspond to a track in the database, it is unlikely that good combinations of well matching result elements are found. The combination score rejection threshold may not be fulfilled, zero matching result elements may be selected, and the determined structure may be empty. If an incorrect structure is determined, it may not be selected during validation of the metadata stream. Multiple safeguards may therefore be in place to prevent obtaining incorrect or irrelevant information from the metadata stream(s).

Repeated first or second metadata entries may also be ignored. In FIG. 10, metadata entries 1000 and 1002 contain the same information, and thus may indicate that the same song would be played twice in a row, with a news broadcast (as indicated by metadata entry 1001) in between. However, it is unlikely that the same song were truly played twice in a row, and the metadata entry 1002 is likely a duplicate of 1000. Such duplicates may be ignored by rejecting metadata entries that follow one another with at most a predetermined number of different metadata entries in between. Different metadata entries refers to a difference from the suspected duplicate metadata entries, and the different metadata entries need not necessarily be different from one another. In the example of FIG. 10, the predetermined number of metadata entries in between may be 1, which may result in rejecting metadata entry 1002. A sampling rate or a rate of receiving metadata entries from the metadata stream may also be considered when selecting the predetermined number of metadata entries.

Repeated metadata entries may also be rejected based on repeating patterns, structures or phrases. In FIG. 11, metadata elements 1101, 1103, and 1105 all have the same content: "Now playing - null - null". Metadata elements 1101, 1103 and 1105 may indicate that no song is currently playing, or alternatively information regarding the song currently playing is not available. Nevertheless, metadata elements 1101, 1103 and 1105 may not be of interest. The entire metadata entry "Now playing - null - null" or metadata elements such as "null" may be matched to predetermined phrases as described earlier, for example, and removed or rejected on that basis.

Even though the invention has been described with reference to one or more embodiments according to the accompanying drawings, it is clear that the invention is not restricted thereto but may be modified in several ways within the scope of the appended claims. All words and expressions should be interpreted broadly, and they are intended to illustrate, not to restrict, the embodiments. It will be obvious to a person skilled in the art that, as technology advances, the inventive concept may be implemented in various ways.

**Claims**

1. An apparatus (100) for processing an audio metadata stream (170), comprising:

   a database (120) configured to store tracks, each track comprising track metadata;
   one or more processors (110) configured to cause performance of at least the following:

   receiving (142) a first metadata entry from an audio metadata stream associated with an audio stream;
   extracting (144) first metadata elements from the first metadata entry;
   searching (146) the database for each of the first metadata elements to receive result sets;
   selecting (148), from the result sets, matching result elements for the first metadata elements;
   mapping (150) metadata types associated with the matching result elements to positions of the first metadata elements in the first metadata entry; and
   determining (152) a structure of the first metadata entry based on the mapping.

2. The apparatus of claim 1, wherein the structure (606) comprises one-to-one associations between the metadata types and the positions.

3. The apparatus of any preceding claim 1-2, wherein the one or more processors are further configured to cause performance of at least the following:
   associating (700) the structure with the audio metadata stream.

4. The apparatus of claim 3, wherein the one or more processors are further configured to cause performance of at least the following:

   repeating (702) the receiving, extracting, searching, selecting, mapping, determining, and associating for one or more first metadata entries;
   comparing (704) one or more structures associated with the audio metadata stream to a validation criterion; and
   selecting (706) a validated structure for the metadata stream from the one or more structures if the validation criterion is met.

5. The apparatus of claim 3, wherein the one or more processors are further configured to cause performance of at least the following:

   receiving (708) a second metadata entry from the audio metadata stream associated with the audio stream;
   reverse mapping (710) the validated structure of the audio metadata stream to the second metadata entry to acquire second metadata elements from the second metadata entry.

6. The apparatus of claim 5, wherein the reverse mapping further comprises:
   determining (712) types for the second metadata elements as the metadata types mapped to the positions that correspond to positions of the second metadata elements in the second metadata entry.

7. The apparatus of any preceding claim, wherein the selecting comprises:

   constructing (600) combinations comprising combination result elements from result elements in the result sets;
   computing (602) a combination score for each of the combinations; and
   performing (604) the selecting based on the combination scores.

8. The apparatus of claim 7, wherein the constructing comprises:
   constructing (606) all possible combinations of the result elements in the result sets, wherein each combination comprises at most one result element from each result set.

9. The apparatus of claim 8, wherein the combination score is related to popularities of the combination result elements in the database.

10. The apparatus of claim 9, wherein the combination score is further related to popularities of the result elements in the result sets of the combination result elements.

11. The apparatus of claim 10, wherein the combination score is related to ratios of the popularities of the combination result elements in the database and the popularities of the result elements in the result sets of the combination result elements.

12. The apparatus of any preceding claim 7-11, wherein the combination score is related to types of the combination result elements.

13. The apparatus of any preceding claim, wherein the one or more processors comprise:

    one or more memories (114) including computer program code (116); and
    one or more processors (110) configured to execute the computer program code to cause performance of the apparatus.

14. A method for processing an audio metadata stream, the method comprising:

    providing (202) a database configured to store tracks, each track comprising track metadata;
    receiving (204) a first metadata entry from an audio metadata stream associated with an audio stream;
    extracting (206) first metadata elements from the first metadata entry;
    searching (208) the database for each of the first metadata elements to receive result sets;
    selecting (210), from the result sets, matching result elements for the first metadata elements;
    mapping (212) metadata types associated with the matching result elements to positions of the first metadata elements in the first metadata entry; and
    determining (214) a structure of the first metadata entry based on the mapping.

15. A computer-readable medium (130) comprising computer program code (116), which, when executed by one or more processors (110), causes performance of a method for processing an audio metadata stream, comprising:

    providing a database configured to store tracks, each track comprising track metadata;
    receiving a first metadata entry from an audio metadata stream associated with an audio stream;
    extracting first metadata elements from the first metadata entry;
    searching the database for each of the first metadata elements to receive result sets;
    selecting, from the result sets, matching result elements for the first metadata elements;
    mapping metadata types associated with the matching result elements to positions of the first metadata elements in the first metadata entry; and
    determining a structure of the first metadata entry based on the mapping.

― 170

100 APPAR

110 PROC

112 PROC

140 ALG

142 RECEIVE METADATA ENTRY

144 EXTRACT METADATA ELEMENTS

146 SEARCH DATABASE

148 SELECT MATCHING RESULT ELEMENTS

150 MAP METADATA TYPES TO POSITIONS

152 DETERMINE STRUCTURE

114 MEM

116 CODE

130 MEDIUM

120 DATABASE

FIG. 1

```
        ( 200 START )
             │
             ▼
   ┌─────────────────────┐
   │ 202 PROVIDE DATABASE │
   └─────────────────────┘
             │
             ▼
   ┌──────────────────────────┐
   │ 204 RECEIVE METADATA ENTRY│
   └──────────────────────────┘
             │
             ▼
   ┌─────────────────────┐
   │ 206 EXTRACT METADATA │
   │      ELEMENTS        │
   └─────────────────────┘
             │
             ▼
   ┌─────────────────────┐
   │ 208 SEARCH DATABASE  │
   └─────────────────────┘
             │
             ▼
   ┌───────────────────────────┐
   │ 210 SELECT MATCHING RESULT │
   │        ELEMENTS            │
   └───────────────────────────┘
             │
             ▼
   ┌───────────────────────────┐
   │ 212 MAP METADATA TYPES TO  │
   │        POSITIONS           │
   └───────────────────────────┘
             │
             ▼
   ┌─────────────────────────┐
   │ 214 DETERMINE STRUCTURE  │
   └─────────────────────────┘
             │
             ▼
        ( 216 STOP )
```

## FIG. 2

300

Pop Radio 98.5 - Greatest music! Now playing: Moore feat. The Gang - If i were any younger (live) | Coming up: Local news

302

| 304 | 305 | 306 | 307 | 308 | 309 | 310 | 311 |
|-----|-----|-----|-----|-----|-----|-----|-----|
| pop radio 98.5 | pop radio | pop radio 985 | greatest music! | greatest music | now playing | moore feat | the gang |

| moore feat. the gang | moore feat the gang | if i were any younger live | if i were any younger | coming up | local news |
|-----|-----|-----|-----|-----|-----|
| 312 | 313 | 314 | 315 | 316 | 317 |

## FIG. 3

| Id | Total popularity |
|---|---|
| the gang | 8921 |

311

411 →

| Popularity | Item | Relations |
|---|---|---|
| 529 | artist_631 | |
| 59 | song_91726 | artist_1677 |
| 461 | artist_1672 | |
| 190 | song_92951 | artist_632, artist_5282, release_2261 |
| 111 | song_112561 | artist_82119, release_99212 |
| 80 | release_99212 | artist_6772 |
| ... | ... | ... |

421
422
423
424
425
426

| Id | Total popularity |
|---|---|
| if i were any younger live | 7 |

314

414 →

| Popularity | Item | Relations |
|---|---|---|
| 6 | song_772 | artist_631, artist_774, release_8321 |
| 1 | song_7631 | artist_631, artist_774, release_2211 |

| Id | Total popularity |
|---|---|
| if i were any younger | 371 |

315

415 →

| Popularity | Item | Relations |
|---|---|---|
| 251 | song_772 | artist_631, artist_774, release_8321 |
| 59 | song_77281 | artist_2711 |
| ... | ... | ... |

| Id | Total popularity |
|---|---|
| moore feat. the gang | 5 |

312

412

| Popularity | Item | Relations |
|---|---|---|
| 5 | a631, a774 | |

## FIG. 4

| Score | | Combination |
|---|---|---|
| 702 | **500** | (artist_631, artist_774) moore feat. the gang, (song_2812) if i were any younger live |
| 656 | **502** | (artist_631, artist_774) moore feat. the gang, (song_772) if i were any younger |
| ... | | ... |

## FIG. 5

**600** CONSTRUCT COMBINATIONS — **606** CONSTRUCT ALL POSSIBLE COMBINATIONS

**602** COMPUTE COMBINATION SCORES

**604** PERFORM SELECTING

## FIG. 6

```
┌─────────────────────────┐
│ 700 ASSOCIATE STRUCTURE │
│  WITH METADATA STREAM   │
└─────────────────────────┘
            │
            ▼
┌─────────────────────────┐
│ 702 REPEAT STEPS FOR    │
│  FIRST METADATA ENTRIES │
└─────────────────────────┘
            │
            ▼
        ╱───────╲
       ╱   704   ╲
      ╱ CRITERION ╲
      ╲   MET?    ╱
       ╲─────────╱
            │ YES
            ▼
┌─────────────────────────┐
│ 706 SELECT VALIDATED    │
│       STRUCTURE         │
└─────────────────────────┘
            │
            ▼
┌─────────────────────────┐
│ 708 RECEIVE SECOND      │
│    METADATA ENTRY       │
└─────────────────────────┘
            │
            ▼
┌─────────────────────────┐
│ 710 REVERSE MAP         │
│   VALIDATED STRUCTURE   │
└─────────────────────────┘
            │
            ▼
┌─────────────────────────┐
│  712 DETERMINE TYPES    │
└─────────────────────────┘
```

## FIG. 7

"Abba - greatest hits - waterloo (live)" — 800

"%artist% - %album% - %title%" — 802

["abba", "greatest hits", "waterloo", "waterloo (live)"] — 804

{"artist":"abba", "title":"waterloo", "album":"greatest hits", "position": "05"} — 806

## FIG. 8

EP 4 137 970 A1

**"Abba - greatest hits - 05 waterloo (live)"** ─ 900

*{"artist":"abba", "title":"waterloo", "album":"greatest hits", "position": "05"}* ─ 904

**"Abba - waterloo (single 1982) - 01 waterloo"** ─ 902

*{"artist":"abba", "title":"waterloo", "album":"waterloo (single 1982)", "position": "01"}* ─ 906

## FIG. 9

| | |
|---|---|
| "Abba - greatest hits - waterloo (live)" | ─1000 |
| "News - stockholm city" | ─1001 |
| "Abba - greatest hits - waterloo (live)" | ─1002 |

## FIG. 10

| | |
|---|---|
| "Now playing - Abba - waterloo" | ─1100 |
| "Now playing - null - null" | ─1101 |
| "Now playing - Maroon 5 - This love" | ─1102 |
| "Now playing - null - null" | ─1103 |
| "Now playing - AC/DC - Highway to hell" | ─1104 |
| "Now playing - null - null" | ─1105 |
| "Now playing - Michael Jackson - Thriller" | ─1106 |

## FIG. 11

15

Europäisches
Patentamt

European
Patent Office

Office européen
des brevets

# EUROPEAN SEARCH REPORT

Application Number

**EP 21 19 1467**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/055372 A1 (SPRINGER THOMAS BRIAN [US] ET AL) 10 March 2005 (2005-03-10) * paragraphs [0004] - [0005], [0007], [0028], [0032] - [0045], [0051] - [0055], [0065], [0073] - [0078]; figures 1-2,4 * | 1-15 | INV. G06F16/68 |
| A | US 2009/158155 A1 (GRACENOTE INC [US]) 18 June 2009 (2009-06-18) * paragraphs [0039] - [0041], [0048] - [0059]; figures 1A-1B * | 1-15 | |
| A | US 9 305 119 B1 (PARTOVI HADI [US] ET AL) 5 April 2016 (2016-04-05) * paragraphs [0014] - [0015], [0022] - [0028], [0035] - [0039], [0046] - [0047], [0050] - [0051], [0053] - [0056]; figure 3 * | 1-15 | |

TECHNICAL FIELDS
SEARCHED (IPC)

**G06F**

The present search report has been drawn up for all claims

| Place of search | Date of completion of the search | Examiner |
|---|---|---|
| **The Hague** | **26 January 2022** | **Bercan, Radu** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**EP 4 137 970 A1**

## ANNEX TO THE EUROPEAN SEARCH REPORT
## ON EUROPEAN PATENT APPLICATION NO.

EP 21 19 1467

26-01-2022

| Patent document cited in search report | | Publication date | Patent family member(s) | | Publication date |
|---|---|---|---|---|---|
| US 2005055372 | A1 | 10-03-2005 | NONE | | |
| US 2009158155 | A1 | 18-06-2009 | AU | 2002323413 A1 | 10-03-2003 |
| | | | EP | 1425745 A2 | 09-06-2004 |
| | | | JP | 2005526340 A | 02-09-2005 |
| | | | KR | 20040029452 A | 06-04-2004 |
| | | | US | 2003135513 A1 | 17-07-2003 |
| | | | US | 2009158155 A1 | 18-06-2009 |
| | | | WO | 03019560 A2 | 06-03-2003 |
| US 9305119 | B1 | 05-04-2016 | NONE | | |

EPO FORM P0459

For more details about this annex : see Official Journal of the European Patent Office, No. 12/82